# EUROPEAN PATENT APPLICATION

(11) **EP 2 693 598 A1**
(43) Date of publication of application: **05.02.2014**
(21) Application number: 12762877.4
(22) Date of filing: 30.03.2012
(51) Int. Cl.: H02J 7/34, B60L 11/02, H02J 7/14

(54) **SYSTEM AND METHOD FOR CONTROLLING THE CHARGING OF BATTERIES FROM AN ELECTRIC RAIL SYSTEM**

(30) Priority: 31.03.2011 ES 201130502
(71) Applicant: Administrador De Infraestructuras Ferroviarias (ADIF), 28045 Madrid (ES)
(72) Inventor: TOBAJAS GUERRA, Carlos, E-28045 Madrid (ES); GOMEZ ALORS, Antonio, E-28045 Madrid (ES); CANALEJO MADUEÑO, Francisco Javier, E-28045 Madrid (ES); BEAMUZ MORILLAS, Julian, E-28045 Madrid (ES); BERRIOS VILLALBA, Antonio, E-28045 Madrid (ES); MARTINEZ ACEVEDO, Jose Conrado, E-28045 Madrid (ES)
(74) Representative: Ungria López, Javier
(86) International application number: PCT/ES2012/070218
(87) International publication number: WO 2012/131141

(57) **Abstract**

The invention uses the power of electrical sub-stations (2) that power a network of catenaries (1) and the braking energy that the trains transmit to the network of catenaries (1), for the mass power supply of equipment for charging vehicle batteries (8) from the catenary (1), from an energy storage device (5), or from both, according to the power required by the equipment (8), the power stored in the device (5), and the power of the catenary (1), as long as the catenary power required by the trains is supplied. The invention also enables the device (5) to be charged when the power required by the equipment (8) is less than that of the catenary (1), without affecting the rail service.

## Description

### OBJECT OF THE INVENTION

The system and method object of the present invention are intended to control the charging of batteries from the electric rail system, in such a way that it is possible to provide mass power supply to electric vehicles from the network of catenaries, without affecting the electric power supply to trains.

The invention charges the batteries of electric vehicles directly from the catenary, from an energy storage device or from both simultaneously. Since the energy storage device must have enough charge stored, this charging will be carried out using the braking energy that the trains transmit to the catenary or using the energy that the electrical sub-stations apply to the catenary to power the trains, in the event of the energy required by the batteries of electric vehicles plus the energy required by the trains in service, being less than the energy that the sub-stations apply to the catenary.

### BACKGROUND OF THE INVENTION

Using the energy circulating in direct current railway traction catenaries to recharge batteries using a DC/DC (direct current/direct current) power converter which is connected to the catenary and to a DC/AC (direct current/alternating current) converter, which is in turn connected to the pieces of battery charging equipment, is known in the state of the art.

In this case, batteries should be recharged at times when the trains circulating have a low energy demand, given that at peak times, rail operation may be affected, given that additional electrical charges to those of the trains should exist the sub-station power rating may be reduced, with the possibility of significant technical limitations as far as powering more trains is concerned, which is why it is not permissible to power electric vehicle batteries at the expense of limiting power supply to trains. As a result, if the batteries generate a constant additional charge to the sub-stations that power the catenary system, the maximum power that these sub-stations are able to supply may suddenly overflow, thus resulting in an overload in the catenary system which cannot be allowed owing to the reasons given above.

On the other hand, in rail systems it is known that the braking energy of trains can be used, by converting the train's kinetic energy into electrical energy, the maximum brake power being equal to the maximum pulling power. The energy generated is evacuated to the train's own auxiliary services and to the traction electricity network and what is left is burnt in the train's brake resistors.

In order to inject energy into the traction network, the train should increase its output voltage to above the network voltage or catenary voltage present in the area of the line where it is connected. In this way, the charges connected to this same network absorb energy from the train rather than from the sub-stations that power the course, depending on the difference in voltage between both and the distance (in electrical resistance) from the charge to the sources. The train increases its output voltage until it has successfully evacuated all the braking energy to the electrical network or until it reaches its maximum output voltage and the energy that the train cannot inject into the network must be diverted to the brake resistors. The use of this energy to charge energy storage devices is also known in the state of the art.

However, no system and/or method that enables the mass recharge of electric car batteries is known about, which does not compromise rail operation and which furthermore takes advantage of the braking energy produced by trains.

### DESCRIPTION OF THE INVENTION

In order to fulfil the aims and resolve the limitations mentioned above, the invention proposes a new system and method for controlling the charging of batteries from the electric rail system, by making use of the braking energy produced by trains and comprises electrical sub-stations that power a network of DC (direct current) railway traction catenaries, which is connected to a DC/DC (direct current/direct current) power converter, which, by means of a first DC/AC (direct current/alternating current) converter, is connected to an energy storage device in order to facilitate the recharging of said energy storage device from the catenary. In addition, the system, object of the current invention, comprises a second DC/AC converter which is connected to the DC/DC power converter and to a number of pieces of vehicle battery charging equipment, in order to facilitate the charging of batteries in electric vehicles. The main factor making the present invention novel is that it is characterised in that it comprises a control module for governing the system, which is configured in such a way that it makes possible to power the pieces of vehicle battery charging equipment from the catenary, from the energy storage device or from both, depending on the power required by the battery charging equipments, on the power stored in the energy storage device and on the catenary power. Moreover, the control module is configured in such a way that it facilitates the charging of the energy storage device when the power required by all the pieces of vehicle battery charging equipment is lower than that of the catenary, all of which is carried out provided that the catenary power required by the trains is supplied.

The described configuration is highly advantageous insofar as that it allows electric vehicle batteries to be charged *en masse,* without compromising the power supply to trains in circulation.

In order to realise the above described operation, the DC/DC power converter is connected to the first and second DC/AC converter, by means of a direct bus, in such a way that the DC/DC power converter is configured such that it maintains a constant bus output voltage (V_{bus}), in order to compensate for the energy flows required by the first and second DC/AC converter and, in turn, to compensate for the energy flows required by the energy storage device and by the pieces of vehicle battery charging equipment.

The first DC/AC converter is furthermore configured in such a way that its output is regulated depending on the power set point sent to it by the control module, in such a way that it absorbs or delivers power to the direct bus, depending on whether it powers the pieces of vehicle battery charging equipment or whether it is recharged by storing energy coming from the catenary.

Moreover, the second DC/AC converter is configured in such a way that, upon indication from the control model, it absorbs the energy from the direct bus, depending on the charges connected to the pieces of vehicle battery charging equipment, regulating the number of active outputs in pieces of vehicle battery charging equipment, depending on said charge connected to each piece of vehicle battery charging equipment, also reducing the number of pieces of active vehicle battery charging equipment and as a result, reducing the output charge when it exceeds the sum of the power available in the catenary plus that stored in the energy storage device. This reduction in the number of pieces of active vehicle battery charging equipment is carried out until the output power of said pieces of active equipment is less than or equal to the sum of the power available in the catenary plus that of the energy storage device. Furthermore, the pieces of vehicle battery charging equipment are blocked when a previously fixed catenary intensity limit is exceeded over a period of time previously established in the control model, in which case the output of the second converter is annulled, in such a way that no power is supplied to any of the pieces of vehicle battery charging equipment, thereby enabling the power required by the trains in service to be supplied, provided that the sub-stations that power the catenary network do not malfunction, i.e., that the battery charging control system, object of the present invention, prioritises the supply of the power required by the trains circulating on the tracks, thus preventing the invention from affecting rail service.

Moreover, the first DC/AC converter is configured to store a maximum value and a minimum value of the bus voltage, so that when this value lies between the stored limits, it acts as a current source and when these limits are exceeded, it serves to regulate as a source of voltage, which keeps the bus voltage at the exceeded limit, in such a way that it is possible to deliver or absorb the direct bus energy, as described above.

It must be pointed out that the control module comprises a communications module with connection to a communications intranet network with at least one rail server and with the electrical energy supply sub-stations of the catenary, in order to operate and carry out maintenance tasks on the system, whether locally or remotely. Furthermore, the communications module is connected to the various components of the system in order to control the operation thereof.

The invention also refers to a method which enables the system described above to operate, which is why it comprises a stage in which a limit on the intensity the catenary is able to absorb is set, said limit corresponding to the limit on the intensity the sub-stations are able to provide, said sub-stations thereby communicating the value of this intensity limit to the control module. A minimum catenary voltage is also established, below which energy cannot be absorbed from the catenary, given that in this situation, it would be overloaded or have broken down, for example when one of the sub-stations is out of order. Therefore, the method establishes a limit on the intensity that may be absorbed from the catenary and a minimal catenary voltage, beyond the limits of which the system is unable to absorb power through the catenary.

Moreover, the method object of the present invention comprises a stage in which a catenary vacuum voltage is established, this voltage corresponding to the maximum voltage that the sub-stations in the electric rail system are able to provide and above which at least one train is delivering current to the catenary from the breaking, as explained in the "background of the invention" section. In this way, the system object of the invention knows when the energy generated during the braking of train is transmitted to the catenary, which occurs when the catenary voltage is greater than the vacuum voltage established.

The vacuum voltage value is an internal variable set for each hour of the week, in such a way that habitual variations in sub-station output voltage can be compensated and furthermore this setting can be adjusted so that the energy storage device may be powered using the energy supplied by the sub-stations at quiet times with reduced train circulation.

The method, object of the invention, also comprises establishing with regards to the energy storage device, a minimum operation power, which allows the pieces of vehicle battery charging equipment to be powered for a minimum established period of time, as well as a maximum storage power and a minimum amount of reserve energy stored thus allows the pieces of vehicle battery charging equipment to be powered over a minimum period of reserve time, in such a way that the absorption or delivery of energy to the direct bus, as described for the system, is carried out depending on these variables, as it is expressed hereinafter.

The method also comprises a stage in which a blocking power is established for the pieces of vehicle battery charging equipment, which corresponds to the power required by said pieces of equipment that exceed the intensity limit over a previously established period of time.

Following the stages described above, the method comprises measuring the charge in the pieces of vehicle battery charging equipment, the catenary voltage or intensity, direct bus voltage, the intensity of the energy storage device transferred or absorbed from the direct bus and the output voltage and intensity of the pieces of vehicle battery charging equipment. These measurements are used to calculate the input and output energy and power of each one of the catenary connections, of the pieces of vehicle battery charging equipment and of the energy storage device.

Depending on the above stages, the method, object of the present invention, will either power the pieces of vehicle battery charging equipment from the catenary or from the catenary and the energy storage device or alternatively, from the energy storage device alone.

The pieces of vehicle battery charging equipment are powered from the catenary when the catenary intensity is detected to be lower than the limit on the intensity that can be absorbed via the catenary, as well as when the catenary voltage is detected to be greater than the minimum catenary voltage.

The pieces of vehicle battery charging equipment are powered from the catenary and from the energy storage device when the power stored in the energy storage device is detected to be greater than the minimum power established and the catenary intensity is greater than the established intensity limit. In such a situation the energy storage device provides the necessary power difference between that power required by the pieces of vehicle battery charging equipment and the maximum limit established by the intensity limit and the minimum catenary voltage, provided that said energy storage device has to its disposition said power difference stored.

The pieces of vehicle battery charging equipment are only powered from the energy storage device when the catenary intensity and voltage exceed the margins established by the intensity limit and the previously established minimum catenary voltage.

Moreover, the method, object of the present invention, foresees a stage in which the intensity of some pieces of vehicle battery charging equipment is annulled when the power they demand cannot be supplied by the catenary, by the energy storage device or by both, in such a way that the number of outputs in pieces of vehicle battery charging equipment annulled corresponds to a number such that it establishes that the level required from said pieces of equipment does not exceed the power which may be supplied.

The invention also comprises a stage in which the energy storage device is charged from the catenary, when the power required by the pieces of vehicle battery charging equipment is lower than that supplied by the catenary and said energy storage device does not house its maximum power.

In order to a correct operating of the system object of the present invention, according to the method described, the method additionally comprises determining the power available in the energy storage device and carrying out a first verification to check whether this available power in said energy storage device is indeed greater than the minimum energy established, in such a way that a second verification will then be carried out to check whether the power available in the energy storage device is greater than the reserve energy established and, when the first and second verification have been made, a third verification to check whether the catenary voltage measured is less than or equal to the minimal catenary voltage established will be carried out. A fourth verification is then carried out to check whether the catenary voltage measured is greater than or equal to the vacuum voltage, provided that the third verification has not been made, i.e. when the catenary voltage is greater than the minimum catenary voltage established; a fifth verification is carried out to check whether the catenary current is lower than the catenary current limit established when the fourth verification has not been made, i.e. the catenary voltage is lower than the vacuum voltage, in such a way that once the fifth verification has been made or, in other words when the catenary intensity is greater than the intensity limit established, the catenary power is used to power the pieces of vehicle battery charging equipment.

On the other hand, when the fifth verification has not been verified, the invention comprises a stage in which the catenary power is absorbed by the pieces of vehicle battery charging equipment until the intensity limit is reached, and the remaining of the power required by the pieces of vehicle battery charging equipment, which exceeds the intensity limit, is absorbed from the energy storage device, up to the maximum power level that said energy storage device is able to provide, depending on the power it houses; the power absorbed by the pieces of vehicle battery charging equipment being limited in the event of the energy storage device being unable to provide said remaining power required by the pieces of vehicle battery charging equipment.

When the first verification has not been verified, i.e. when the power available in the energy storage device is lower than the minimum established energy, a sixth verification is carried out to determine whether the catenary voltage is greater than or equal to the minimum catenary voltage, in which case, when said sixth verification is carried out, the catenary power is absorbed by the pieces of vehicle battery charging equipment and should excess power remain, it is absorbed by the energy storage device. Conversely, if the catenary power absorbed is less than that required by the pieces of vehicle battery charging equipment, the output of a number of said pieces of equipment is blocked, in order to equalize the catenary power and the power absorbed by said pieces of equipment which have not been blocked. In the event of this sixth verification not being carried out all the pieces of vehicle battery charging equipment are blocked, thus maintaining rail system operations.

Moreover, when carrying out the second verification and the same has not been verified, i.e. when the power available in the energy storage device falls within the minimum power and the reserve power established, a seventh verification is carried out, to determine whether the catenary voltage measured is less than or equal to the minimum catenary voltage established; in which case the third verification has also been made. In this situation, if the power required by the pieces of vehicle battery charging equipment is less than or equal to the maximum discharge power of the energy storage device, which is a previously known setting, the power is absorbed by the pieces of vehicle battery charging equipment from the energy storage device. In the opposite case, when the power required by the pieces of vehicle battery charging equipment is greater than the maximum discharge power of the energy storage device, the outputs of a number of pieces of vehicle battery charging equipment are blocked until the power they require is equal to the maximum discharge power of the energy storage device. What is more, when neither the second or seventh verification have been made, i.e., when the power available in the energy storage device is less than the reserve power established and the catenary voltage is less than or equal to the minimum catenary voltage established, the catenary power is absorbed by the pieces of vehicle battery charging equipment and should any power remain, it is absorbed by the energy storage device; by contrast, if the catenary power absorbed is less than that required from pieces of vehicle battery charging equipment, a number of outputs in said pieces of equipment are blocked, in order to equalize the catenary power with that absorbed by the pieces of equipment whose outputs have not been blocked.

When the first, third and fourth verification have been verified and the second verification has not been carried out, i.e., when the power available in the energy storage device is greater than or equal to the reserve energy and the catenary voltage measured is greater than the catenary vacuum tension established, an eighth verification is carried out to check whether the power of the energy storage device is less than the maximum power it is able to house, in such a way that, in the event of the eighth verification not being made, the fifth verification already described goes ahead and in the event of said eighth verification indeed being made, power is gradually absorbed from the catenary by the pieces of vehicle battery charging equipment, from the energy storage device or from both, according to a ramp function, provided that the fourth verification has been made, i.e., that the catenary voltage measured is greater than or equal to the vacuum voltage. Immediately after this, a ninth verification is carried out to check whether the power absorbed by the energy storage device and by the pieces of vehicle battery charging equipment is greater than the catenary power, in which case the absorption of power is gradually reduced until said ninth verification is verified. In the event of said ninth verification not being made, a tenth verification is made to check whether the catenary intensity is less than or equal to the intensity limit, which in the event of not being verified, causes the absorption of power to be gradually reduced and said ninth verification is repeated. In contrast, in the event of said tenth verification being confirmed, if the catenary power is less than that required by the pieces of vehicle battery charging equipment, power is absorbed from the energy storage device until the power requirement of the pieces of vehicle battery charging equipment is met or up to the maximum discharge limit (minimum power established) of said energy storage device, in which case a number of outputs of the pieces of vehicle battery charging equipment are blocked, until the power level delivered by the catenary plus that provided by the energy storage device is reached. If the catenary power is greater than that required by the pieces of vehicle battery charging equipment, it is absorbed by said pieces of equipment and the remaining power is loaded in the energy storage device.

Therefore, using the system and method described, it is possible to supply power to the pieces of vehicle battery charging equipment *en masse* from the catenary and from the energy storage device, making the most of the braking energy produced by trains, without affecting rail service, based on the description above.

In order to facilitate a better understanding of this descriptive specification, below is a set of drawings which form an integral part of the same and which serve as a nonlimiting example of the object of the invention.

### BRIEF DESCRIPTION OF THE DRAWINGS

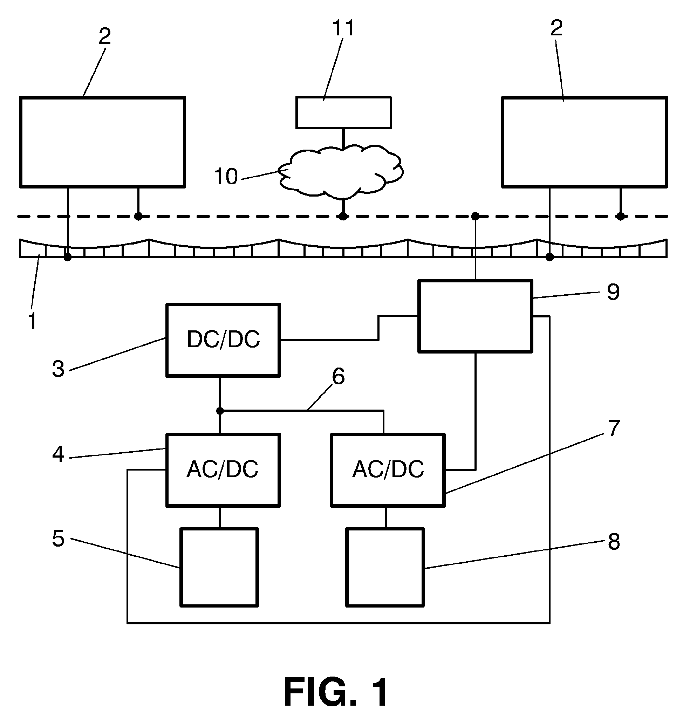

**Figure 1****.** - Shows a functional block diagram of a possible embodiment of the system object of the present invention.
**Figure 2****.**- Is a flow chart representing the various stages that determine the method object of the present invention.

### DESCRIPTION OF THE PREFERRED EMBODIMENT

Below is a description of the present invention based on the abovementioned figures.

The system, object of the present invention, controls the charging of batteries from the electric rail system that is made up by a network of catenaries 1, powered by means of electrical sub-stations 2, in order to provide the necessary power to DC (direct current) railways, which travel along the network of catenaries 1.

Given that the sub-stations 2 are designed to provide a rated power high enough to be able to provide the power required by the trains circulating on the tracks, regardless of the volume of traffic, they are sized in such a way that they provide a power higher than the maximum amount the trains can demand at peak times when there is a greater volume of traffic. Therefore, especially at quiet times with little traffic, the energy the sub-stations 2 are able to provide may be used to recharge electric vehicles *en masse,* which is why the invention also takes advantage of the braking energy generated by the trains, which they transmit to the catenary 1, as described in the "background of the invention" section.

Therefore, the system, object of the present invention, comprises a DC/DC power converter 3, which connects the system to the catenary 1, the output of which, by means of a direct bus 6, is connected to a first DC/AC converter 4, with a second DC/AC converter 7, in such a way that the first DC/AC converter 4 is connected to an energy storage device 5 and the second DC/AC converter 7 is connected to a plurality of pieces of vehicle battery charging equipment 8, to which the vehicle batteries are connected in order to be charged.

The system, object of the present invention, furthermore comprises a control module 9 which controls the operation of the system, said control module 9 is configured as a conventional processor, which has a central control unit with modular architecture, ability to support various communication protocols and high reliability in environments with high levels of electromagnetic disturbance. In turn, the central control unit incorporates the corresponding digital and analogue signal acquisition modules, digital and analogue output modules, communication processing modules and signal processing modules.

In addition, the control module 9 incorporates the corresponding router and switching element which make possible to communicate between the different components of the system by means of Ethernet protocol, which is why the control module 9 is connected to an intranet 10, which in turn is connected to the management, maintenance and remote control energy server 11 of the catenary network 1. The connection between the control module 9 and the server 11 makes possible to carry out system maintenance tasks remotely.

The control module 1 also incorporates the corresponding power feed module for the various system elements, in accordance with known techniques.

Based on the given description it can be easily understood that the control module 9 makes possible to measure the catenary voltage V_{cat}, the catenary intensity I_{cat}, the direct bus voltage V_{bus}, the intensity of the storage Iₛₜₒ and the charge/discharge of the pieces of vehicle battery charging equipment 8 by means of the corresponding sensors of the control module 9, based on the measurement of the voltage and output current thereof. These measurements are made using conventional Hall effect voltage and intensity sensors and they are captured by the analogous input modules of the control module 9.

Based on these measurements taken by the control model 9 and by means of the process modules, the average input and output energy and power of the energy storage device 5 and the pieces of vehicle battery charging equipment 8 is calculated, as well as that of the catenary 1 according to previously established periods of time, in such a way that they determine the energy flows required at each moment and collect information as regards their state.

Furthermore, in the system object of the invention, an intensity limit Iₗᵢₘ is established as the intensity that the catenary is able to absorb, this intensity limit being established by the sub-stations 2, and a minimum catenary voltage Vₘᵢₙ is also established, below which neither the energy storage device 5 nor the pieces of vehicle battery charging equipment 8 can absorb energy, given that this situation would indicate that the catenary 1 is overloaded or that it is in degraded conservation, for example when one of the sub-stations 2 is out of order. Therefore the limits Iₗᵢₘ and Vₘᵢₙ beyond which power cannot be absorbed by the catenary 1 are established in the control module 9 being communicated to it by the sub-stations 2.

The catenary vacuum voltage V_{vacuum} is also established in the control module 9, this representing the maximum voltage that the sub-stations 2 are able to supply and above which one or more trains deliver current to the catenary 1 coming from the braking, as described in the "background of the invention" section. Therefore, if the catenary voltage exceed the vacuum voltage the control module 9 detects that a train is producing braking energy and if is less than or equal to said vacuum voltage this means no trains are supplying braking energy to the catenary 1.

What is more, in the control module 9 it is established a minimum operation power Eₘᵢₙ relative to the energy storage device 5, which makes possible to supply power to the pieces of vehicle battery charging equipment 8 over a minimum period of time established, a maximum storage power Eₘₐₓ and a minimum reserve power Eᵣₑₛₑᵣᵥₑ, that is stored which makes possible to power the sources 8 over a minimum period of reserve time Tᵣₑₛₑᵣᵥₑ, in order to allow energy to be absorbed or delivered to the direct bus 6 of the energy storage device 5, depending on these settings, as described previously, in such a way that from 0% of the charge up to the value Eᵣₑₛₑᵣᵥₑ the energy is supplied from the sub-stations 2 or from trains braking, insofar as that from the value Eᵣₑₛₑᵣᵥₑ to 100% charge in the energy storage device 5, the energy only comes from the regenerative braking of the trains. The power absorbed /delivered E_{char-disch} by the energy storage device 5 to the direct bus 6 by means of measuring its output intensity and voltage, is also known. The maximum discharge power E_{char-disch-max} the storage device can supply is known.

It should also be pointed out that in the system object of the present invention, a blocking power P_{block} for the pieces of equipment 8 is also established, this value corresponding to the power required by said pieces of equipment 8, exceeding that of the Iₗᵢₘ over a period of previously established time, in order to block the operation thereof and prevent energy from being absorbed from the catenary 1 when this situation arises.

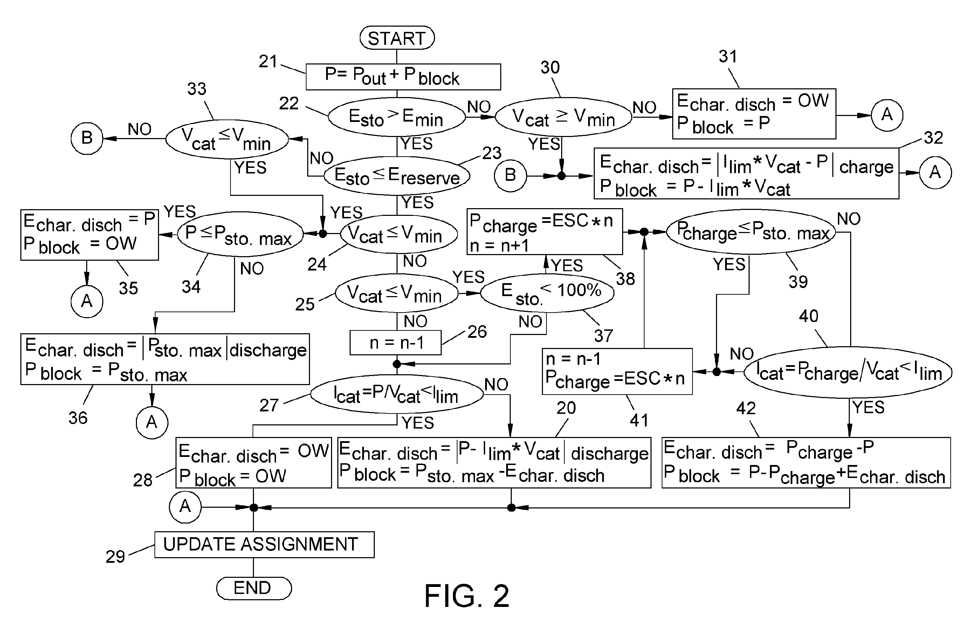

Based on the above and with the help of figure 2, the operation of the system is described in accordance with the invention method, which comprises a first stage 21 in which the internal control variable P is initialized, this internal control variable P corresponding to the power required by the pieces of equipment 8, which is established as the measured output power Pₒᵤₜ of the pieces of equipment 8 plus the blocking power P_{block} of said pieces of equipment 8, in which case the control module 9, via the communications link with the pieces of equipment 8, inhibits or blocks power from being supplied to the number of pieces of equipment 8 needed to reduce the charge to a power greater than or equal to that determined by P_{block}, as shall later be described.

In stage 22, the power stored Eₛₜₒ in the energy storage device 8 is determined and a first verification is carried out to check whether said Eₛₜₒ is greater than Eₘᵢₙ. In the event of it being greater, it moves onto stage 23 and in the opposite event, it moves onto stage 30. At this point, the useful power of the storage device 8 is between Eₘᵢₙ and Eₘₐₓ, both settings depending on the technology of the energy storage device 8 (batteries, ultra-condensers, flywheels, etc.)

In stage 23, a second verification is carried out to check whether Eₛₜₒ is greater than or equal to Eᵣₑₛₑᵣᵥₑ. Said Eᵣₑₛₑᵣᵥₑ power is calculated based on the Eᵣₑₛₑᵣᵥₑ setting and on the required power P. If the third verification is made, it moves onto stage 24 and in the opposite case, it moves onto stage 20. Eᵣₑₛₑᵣᵥₑ is used to decide when the energy storage device 8 is charged from the catenary or from the energy generated by trains braking.

In stage 24, a third verification is made to determine whether the catenary voltage V_{cat} measured is less than or equal to the established catenary voltage Vₘᵢₙ, once first and second verification have carried out. If V_{cat} is less than or equal to Vₘᵢₙ it moves onto stage 21 and in the opposite case, it moves onto stage 25. At this point, it should be pointed out that a reduced catenary voltage may be attributed to an overload therein or to one of the sub-stations 2 which energize the course being out of order. In such circumstances, the energy storage device 5 must not absorb energy from the catenary, given that this absorption increases the risk of a catenary 1 overload and the resulting power cut in the affected course, thus impacting the rail service.

In stage 25, a fourth verification is carried out to check whether the V_{cat} measured is greater than or equal to V_{vaccum}, when the third verification has not been made, i.e. V_{cat} is greater than Vₘᵢₙ. If V_{cat} is greater than or equal to V_{vacuum} then there exist at least one train in the course that is generating braking energy, passing to an absorption process for absorbing the energy produced by a train, which is represented in stage 37 in order to charge the energy storage device 5 and to power the output of the pieces of equipment 8. In the opposite case the goal is to absorb V_{cat} but only to power the output of the pieces of equipment 8, moving onto stage 26, in which the n (n= n+ 1) variable is increased, this variable determining the power that the system aims to absorb from the trains that act as generators, in such a way that if in the process of increasing the power of the train, V_{cat} = V_{acuum}, the intensity absorbed goes down upon the value of n being reduced. The lower limit of n is 1. The process then continues in stage number 27, in which a fifth verification is carried out to check whether I_{cat}, which the power converter 3 should absorb in order to provide the power required P by the pieces of equipment 8, is lower than the Iₗᵢₘ which the sub-stations 2 that power the catenary 1 can provide. If this limit is not reached, it moves onto stage 28 and in the opposite case, it moves onto stage 20.

In stage 28, the values assigned in stage 21 are assigned to the following values: E_{char.disch} = 0 and P_{block}= 0. In this case, the energy storage device 5 is loaded above its Eᵣₑₛₑᵣᵥₑ value and no braking train is detected, a situation in which nothing exists to prevent the entire power required P from being absorbed from the catenary 1 by the pieces of equipment 8 and, as a result, the energy storage device 5 is neither charged nor discharged E_{char-disch}=0 and there is no limitation on the power that can be supplied to the pieces of equipment 8, i.e. P_{block} = 0. It then continues with stage 29, in which the assignments sent to the energy storage device 5 and to the pieces of equipment 8 are updated, thus ending the process and beginning once again with stage 22.

In stage 20 mentioned above, the following values are assigned: E_{char.disch}. = [P - Iₗᵢₘ x V_{cat}] discharge and P_{block} = E_{char.disch.max} ∼ E_{char.disch}. This case corresponds to the energy storage device 5 being loaded over its Eᵣₑₛₑᵣᵥₑ value, no braking train being detected, not being possible to supply all the power required P from the catenary 1, which is why the energy storage device 5 supplies the power needed so as not to supersede Iₗᵢₘ and to establish an output power limitation Pₒᵤₜ equal to the difference between E_{char.disch.} and E_{char.disch.} E_{char.disch.}, is a variable that communicates the energy storage device 5 to the control module 9 and which may depend on the energy level Eₛₜₒ. It then moves onto stage 29 already described above.

In stage 22, i.e. when the first verification has not been made to confirm where Eₛₜₒ is less than Eₘᵢₙ, a sixth verification is carried out to determine whether V_{cat} is greater than or equal to Vₘᵢₙ, in which case there is no energy available in the energy storage device 5 and the power P must be supplied from the catenary 1, said sixth verification thereby depending on whether energy can be absorbed from the catenary 1, in such a way that if this can be done, the process moves onto stage 32 and in the opposite case, it moves onto stage 31.

In stage 31, it is not possible to supply energy to the pieces of equipment 8, which is why all consumption thereof should be blocked. The assignments take on the following values, E_{char.disch.} = 0 V y P_{block} = P, the process continuing with stage 29.

In stage 32 the values E_{char.disch.} = (Iₗᵢₘ x V_{cat} - P) charge and P_{block} = p - Iₗᵢₘ x V_{cat} are assigned.

In this case, the energy storage device 5 has been discharged, which means it is able to absorb energy from the catenary 1, given that V_{cat} is greater than or equal to Vₘᵢₙ, thus the greatest amount of energy available thereby being absorbed Iₗᵢₘ x V_{cat} in order to power the pieces of equipment 8 and the remaining power is used to charge the storage device 5. If the power absorbed from the catenary 1 is greater than the power required P, the power P is limited by blocking the necessary pieces of equipment 8 P_{block} = P - I_{charge} x V_{cat}, in which case the process moves onto stage 29, already described.

Stage 33, which the process moves onto when the second verification of stage 23 has not been made, consists of making a seventh verification to determine whether the voltage V_{cat} is less than or equal to Vₘᵢₙ, in which case the third verification has also been made and the process moves onto stage 34. At this point, the energy storage device 5 is charged between Eₘᵢₙ and Eᵣₑₛₑᵣᵥₑ. In This state, the energy storage device 5 may be charged from the catenary 1 or may supply energy to the pieces of equipment 8. In the event of V_{cat} being greater than Vₘᵢₙ, the process moves onto stage 32, described above.

Stage 34 corresponds to the event of not being possible to absorb energy from the catenary 1, which is why the pieces of equipment 8 should be powered from the energy storage device 5. In this stage, we determine whether the power required P by the device 5 is less than or equal to the maximum discharge power of the device 5 E_{char.disch.max}. If it is less, the process continues to stage 35 and in the opposite case the process moves onto stage 36.

In stage 35, the values E_{char-disch} = P and P_{block} = OW are assigned. In this case, the device 5 has charge and power to supply to the pieces of equipment 8 and cannot absorb energy from the catenary 1, all the power therefore being supplied by the device 5, with no need to block the charge of the pieces of equipment 8. In this case the process moves onto stage 29 already described above.

In stage 36, the values E_{char-disch} = [E_{char-disch-max}] discharge and P_{block} = P- E_{char-disch-max} are assigned. This case corresponds to the device 5 having charge but its power being less than that required to power the pieces of equipment 8 and cannot absorb energy from the catenary 1, which means that the power P of the pieces of equipment 8 should therefore be adjusted to the device's 5 discharge maximum E_{char-disch-max} and the remaining charge from the pieces of equipment 8 should be blocked. The process then moves onto stage 29 already described.

In stage 37, the stage prior to carrying out the fourth verification of stage 25, in which a train generating energy has been detected, an eighth verification is carried out, to check whether device 5 is not completely charged. If this is the case, the process moves onto stage 27 already described above and in the opposite case, the process proceeds with the charging method described in stage 38, in which the power demand attempted to be extracted from the trains acting as a generator is controlled. Since the power that a train makes available in the catenary 1 is unknown, the system absorbs energy gradually until it is no longer considered possible for more power to be extracted from the catenary 1, given that its voltage is equal to the voltage of the sub-stations 2 that energize the course. In order to generate a form of absorption in ramp from the power absorbed, an internal variable n is used, which is increased each time the process passes through this stage (n=n+1). The power absorbed P_{charge} is determined by the product of n by a power scale (esc) established in the system, which determines the gradient of the ramp. The charge power is increased whilst the conditions of stages 25 and 37 are met, the process continuing with stage 39.

In said stage 39, a ninth verification is carried out to check whether P_{charge} may be absorbed by the device 5 and by the pieces of equipment 8. If P_{charge} is greater than P + E_{char-disch-max} we thus move onto stage 41, in the opposite case the process continuing with stage 40.

In said stage 40, a tenth verification is carried out to check whether I_{cat} is less than or equal to Iₗᵢₘ. If this is the case, the process moves onto stage 42 and in the opposite case, onto stage 41.

In said stage 41, P_{charge} is reduced until it adjusts to the system limits, which is why n (n=n-1) is reduced and P_{charge} recalculated, once again checking the limits in stage 39.

In stage 42, the values E_{char-disch} = P_{charge} - P are assigned, in such a way that the positive values correspond to the charge and the negatives to the discharge and P_{block} = P - P_{charge} + E_{char-disch.} This case corresponds to device 5 being charged above its Eᵣₑₛₑᵣᵥₑ value, a braking train being detected, thus adjusting the energy demand to the power provided by the train P_{charge}. This power is used to power the output of the pieces of equipment 8 and the remaining power is stored in the device 5. If P_{charge} is less than the power required P then the device 5 supplies the remaining power. If it is still not possible to supply P, the power required by the pieces of equipment 8 is then reduced, establishing that P_{block} = P-P_{charge} + E_{char-disch}. In this case, E_{char-disch} may be positive, in which case the device 5 is charged or, it may be negative, in which case it is discharged, continuing with stage 29 already described.

In order to carry out the operation already mentioned, the DC/DC power converter 3 is configured in such a way that it maintains its output voltage V_{bus} in order to compensate for the energy flows required by the first and second DC/AC converters 4 and 7.

Furthermore, the first DC/AC converter 4 is configured in such a way that its output is regulated depending on the assigned power that the control module 9 sends to the first DC/AC converter 4, in order to absorb or deliver power to the direct bus 6, as described above. The second DC/AC converter 7 is configured in such a way that, upon indication from the control module 9, it absorbs the energy of the direct bus 6, depending on the charges connected to the pieces of equipment 8, thus regulating the number of active outputs in pieces of equipment 8, depending on said charge connected to each piece of equipment 8, also reducing the number of pieces of active equipment 8 and as a result, the output charge when it is greater than that of the sum of power available in the catenary plus that stored in the device 5, this reduction in the number of active pieces of equipment 8 being carried out until the output power of said active pieces of equipment 8 is less than or equal to the sum of the power available in the catenary and in the device 5; the pieces of equipment 8 are blocked when the intensity Iₗᵢₘ is exceeded over a period of time previously established in the control module 9, thus annulling the output of the second converter 7.

Furthermore, the first DC/AC converter 4 is configured to store a maximum and a minimum V_{bus} value, so that when this value falls within the limits stored, it acts as a source of current and when these limits are exceeded, it carries out a regulation as a source of voltage, which keeps the V_{bus} at the exceeded limit.

Therefore, using the system and method object of the present invention, it is possible to charge electric vehicles *en masse,* making the most of the energy produced by trains when the break, without affecting rail service.

## Claims

1. Control system for the charging of batteries from the electric rail system, which takes advantage of the braking energy of the trains and comprises as least:
• electrical sub-stations (2) for powering
• a network of direct current (DC) railway traction catenaries (1), which is connected to
• a DC/DC power converter (3), which is connected to
• a first DC/AC converter (4), which is connected to
• an energy storage device (5) in order to make possible the charging of said energy storage device (5) from the catenary (1);
• a second DC/AC converter (7), which is connected to the DC/DC power converter (3) and to a number of
• pieces of vehicle battery charging equipment (8);
**characterised in that** it comprises a control module (9) for controlling the system, configured in such a way that it makes possible to supply power to the pieces of vehicle battery charging equipment (8) from an element selected from the catenary (1), the energy storage device (5) and a combination thereof; depending on the power (P) required by the pieces of vehicle battery charging equipment (8), on the power stored in the energy storage device (5) and on the catenary power (1); the control module (9) also being configured in such a way that it makes possible to charge the energy storage device (5) when the power required by the pieces of vehicle battery charging equipment (8) is less than the power of the catenary (1); all of which occurs provided that the catenary power required by the trains is supplied.

2. Control system for the charging of batteries from the electric rail system, according to claim 1, **characterised in that** the DC/DC power converter (3) is connected to the first and second DC/AC converters (4, 7) by means of a direct bus (6); said DC/DC power converter (3) being configured in such a way that it keeps the bus output voltage (V_{bus}) constant, in order to compensate for the energy flows required by the first and second DC/AC converters (4, 7); the first DC/AC converter (4) being configured in such a way that its output is regulated depending on the power assigned that is sent to said first DC/AC converter (4) by the control module (9) in order to absorb or deliver power to the direct bus (6); and the second DC/AC converter (7) being configured in such a way that upon indication from the control module (9), it absorbs energy of the direct bus (6), depending on the charges connected to the pieces of vehicle battery charging equipment (8), regulating the number of active outputs in the pieces of vehicle battery charging equipment (8) depending on said charge connected to each piece of vehicle battery charging equipment (8), and also reducing the number of active pieces of vehicle battery charging equipment (8), and as a result when the output charge is greater than the sum of the power available in the catenary plus the power stored (Eₛₜₒ) in the energy storage device (5) the reduction of said pieces of active vehicle battery charging equipment (8) being carried out until the output power of said pieces of active vehicle battery charging equipment (8) is less than or equal to the sum of power available in the catenary and in the energy storage device (8) (Eₛₜₒ), and the pieces of vehicle battery charging equipment (8) are blocked when a previously fixed catenary intensity limit (Iₗᵢₘ) is exceeded over a period of time, previously established in the control module (9), thus annulling the output of the second DC/AC converter (7).

3. Control system for the charging of batteries from the electric rail system, according to claim 1, **characterised in that** the first DC/AC converter (4) is configured to store a maximum value and a minimum value of the bus voltage (V_{bus}), so that when it falls within the limits stored, it acts as a source of current and when these limits are exceeded, it carries out a regulation as a source of voltage which keeps the bus voltage (V_{bus}) at the exceeded limit.

4. Control system for the charging of batteries from the electric rail system, according to claim 1, **characterised in that** the control module (9) comprises a communications module with connection to an intranet network (10) in communication with at least a rail server (11) and the electrical sub-stations (2) that supply energy to the catenary (1), in order to operate and carry out system maintenance tasks in a mode selected between either local mode and remote mode.

5. Method for controlling the charging of batteries from the electric rail system, according to the system of claim 1, **characterised in that** it comprises the following stages:
- establishing a limit on the intensity (Iₗᵢₘ) that the catenary (1) can absorb and a minimum catenary voltage (Vₘᵢₙ), beyond the limits of which the system cannot absorb power through the catenary (1);
- establishing a catenary vacuum voltage (V_{vacuum}) corresponding to the maximum voltage that the electric rail system sub-stations (2) are able to provide and above which at least one train delivers current to the catenary by braking;
- establishing a minimum operational power (Eₘᵢₙ) in relation to the energy storage device (5) which makes possible to power the pieces of vehicle battery charging equipment (8) over an established minimum period of time, a maximum storage power (Eₘₐₓ) and a minimum reserve power (Eᵣₑₛₑᵣᵥₑ) stored which makes possible to supply power to the pieces of vehicle battery charging equipment (8) over a minimum period of reserve time (Tᵣₑₛₑᵣᵥₑ);
- establishing a blocking power for the pieces of vehicle batter charging equipment (8) corresponding to the power required by said pieces of vehicle battery charging equipment (8) which exceeds the intensity limit (Iₗᵢₘ) over a previously established period of time;
- measuring the charge in the pieces of vehicle battery charging equipment (8), the voltage (V_{cat}) and intensity (I_{cat}) of the catenary, the direct bus voltage (V_{bus}), the intensity of the energy storage device (5), the voltage (Vₒᵤₜ) and intensity (Iₒᵤₜ) of the output of the pieces of vehicle battery charging equipment (8);
- calculating the average input and output energy and power of each one of the catenary connections (1), pieces of vehicle battery charging equipment (8) and the energy storage device (5) using the magnitudes measured;
- supplying power to the pieces of vehicle battery charging equipment (8) from a device, selected from:
• the catenary (1) when the catenary intensity (I_{cat}) is detected to be less than the limit on the intensity (Iₗᵢₘ) that can be absorbed via the catenary (1) established by the sub-stations (2) that supply power to said catenary (1) and, when the catenary voltage (V_{cat}) is detected to be greater than the minimum catenary voltage (Vₘᵢₙ);
• the catenary (1) and the energy storage device (5), when the energy stored (Eₛₜₒ) in the energy storage device (5) is greater than the minimum power (Eₘᵢₙ) established in said energy storage device (5), and the catenary intensity (I_{cat}) is greater than the intensity limit (Iₗᵢₘ) established, the energy storage device (5) providing the difference in power required between the power required by the pieces of vehicle battery charging equipment (8) and the maximum limit established by the intensity limit (Iₗᵢₘ) and the minimum voltage (Vₘᵢₙ), provided that the energy storage device (5) has said difference in power stored;
• the energy storage device (5) when the catenary intensity (I_{cat}) and voltage (V_{cat}) are beyond the margins established by the intensity limit (Iₗᵢₘ) and the minimum voltage (Vₘᵢₙ),
- annulling the intensity of some pieces of vehicle battery charging equipment (8) when it is detected that the power (P) they require cannot be supplied by a device selected from the catenary (1), the energy storage device (5) and a combination thereof; the number of outputs in the pieces of vehicle battery charging equipment (8) being annulled in a number up to when said level of power required from the pieces of vehicle battery charging equipment (8) does not exceed the power that can be supplied and;
- charging the energy storage device (5) from the catenary (1) when the current required by the pieces of vehicle battery charging equipment (8) is less than that supplied by the catenary (1) and does not have the maximum power (Pₘₐₓ).

6. Method for controlling the charging of batteries from the electric rail system, according to claim 5, **characterised in that** it comprises the following stages:
- determining the power stored (Esto) in the energy storage device (5) and carrying out a first verification (22) to check whether the power stored (Esto) in the energy storage device (5) is greater than the minimum power (Emin) established;
- carrying out a second verification (23) to check whether the power stored (Esto) in the energy storage device (5) is greater than the reserve power (Ereserve) established;
- carrying out a third verification (24) to check whether the catenary voltage (Vcat) measured is less than or equal to the minimum catenary voltage (Vmin) established, when the first and second verifications have been carried out;
- carrying out a fourth verification (25) to check whether the catenary voltage (Vcat) measured is greater than or equal to the vacuum voltage (Vvacuum), when the third verification (24) has not been carried out, that is the catenary voltage (Vcat) is greater than the minimum voltage (Vmin);
- carrying out a fifth verification (27) to check whether the catenary current (I_{cat}) is less than the intensity limit (Ilim) when the fourth verification (25) has not been carried out, that is the catenary voltage (Vcat) is less than the vacuum voltage (Vvacuum);
- using the catenary power (1) to supply power to the pieces of vehicle battery charging storage equipment (8) when the fifth verification (27) has been carried out, that is the catenary intensity (I_{cat}) is less than the intensity limit (Ilim);
- when the fifth verification (27) has not been verified, absorbing (20) the catenary power through the pieces of vehicle battery charging equipment (8) until the intensity limit (Ilim) is reached, from the energy storage device (5), until the maximum power level (Echar-disch-max) that the energy storage device (5) is able to supply depending on the power stored therein is reached; the power absorbed by the pieces of vehicle battery charging equipment (8) being limited in the event of the energy storage device (5) not being able to provide said remaining power required by the pieces of vehicle battery charging equipment (8).

7. Method for controlling the charging of batteries from the electric rail system, according to claim 6, **characterised in that** when the first verification (22) has not been verified, a sixth verification (30) is carried out to check whether the catenary voltage (V_{cat}) is greater than or equal to the minimum voltage (Vₘᵢₙ) in which case, when said sixth verification (30) is carried out, the catenary power is absorbed by the pieces of vehicle battery charging equipment (8) and if there is any remaining power, it is absorbed by the energy storage device (5); in contrast, if the catenary power absorbed is less than the power required by the pieces of vehicle battery charging equipment (8), the outputs of a number of pieces of battery charging equipment (8) are blocked, in order to equalise the catenary power with that absorbed by the pieces of vehicle battery charging equipment (8) that have not been blocked and in the event of said sixth verification (30) not being carried out, all the pieces of vehicle battery charging equipment are blocked.

8. Method for controlling the charging of batteries from the electric rail system, according to claim 6, **characterised in that** when the second verification (23) has not been verified, that is the power available in the energy storage device (5) is between the minimum power (Eₘᵢₙ) and the reserve power (Eᵣₑₛₑᵣᵥₑ) a seventh verification (33) is carried out to check whether the catenary voltage (V_{cat}) measured is less than or equal to the minimum catenary voltage (Vₘᵢₙ) established, in which case the third verification (24) will have also been carried out and if the power required by the pieces of vehicle battery charging equipment (8) is less than or equal to the maximum charging power (E_{char-disch-max}) of the energy storage device (5), the power is absorbed (35) by the pieces of vehicle battery charging equipment (8) from the energy storage device (5); in the opposite case (36), that is the power required by the pieces of vehicle battery charging equipment (8) being greater than the maximum discharge power of the energy storage device (5), the outputs of a number of pieces of vehicle battery storage equipment (8) are blocked until the power they require is equalised with the maximum discharge power of the energy storage device (5); having foreseen that when neither the second (23) or seventh (33) verification have been carried out, the catenary power is absorbed (32) by the pieces of vehicle battery charging equipment (8) and if there is any remaining power, it is absorbed by the energy storage device (5); in contrast, if the catenary power absorbed is less than that required by the pieces of vehicle battery charging equipment (8), a number of outputs in said pieces of vehicle battery charging equipment (8) are blocked in order to equalise the catenary power with that absorbed by the pieces of vehicle battery charging equipment (8), the outputs of which have not been blocked.

9. Method for controlling the charging of batteries from the electric rail system, according to claim 6, **characterised in that** when the first (22), third (24) and fourth (25) verification have been carried out and the second verification (23) has not been carried out, that is the power available in the energy storage device (5) is greater than or equal to the reserve power (Eᵣₑₛₑᵣᵥₑ) and the catenary voltage (V_{cat}) measured is greater than the catenary vacuum voltage (V_{vacuum}) established; an eighth verification (37) is carried out to check whether the power of the energy storage device (5) is less than its maximum power (Eₘₐₓ) and in the event of said eighth verification (37) not being carried out, we continue with the fifth verification (27) and; in the event of said eighth verification (37) indeed being carried out, power is absorbed from the catenary gradually by a device selected from the pieces of vehicle battery charging equipment (8), the energy storage device (5) and a combination thereof, according to a ramp function, provided that the fourth verification (25) is verified, and immediately afterwards, a ninth verification (39) is carried out to check whether the power absorbed by the pieces of vehicle battery charging equipment (8) and the energy storage device (5) is greater than the catenary power, in which case the absorption of power is gradually reduced until said ninth verification (39) is verified, and in case of said ninth verification (39) not being verified, a tenth verification (40) is carried out to check whether the catenary intensity (I_{cat}) is less than or equal to the intensity limit (Iₗᵢₘ), which in case of not being verified, results in the absorption of power being gradually reduced and the ninth verification (39) being repeated, and in case of said tenth verification (42) being verified, if the catenary power is greater than that required by the pieces of vehicle battery charging equipment (8), power is absorbed from the energy storage device (5) until the power required by the pieces of vehicle battery charging equipment (8) is completed or up to the maximum discharge limit of the energy storage device (5), in which case a number of outputs in the pieces of vehicle battery charging equipment (8) are blocked until the level of power delivered by the catenary plus that available in the energy storage device (5) is reached; and if the catenary power is greater than that required by the pieces of vehicle battery charging equipment (8) it is absorbed by said pieces of equipment and the remaining power is charged in the energy storage device (5).

10. Method for controlling the charging of batteries from the electric rail system, according to claim 6, **characterised in that** the vacuum voltage (V_{vacuum}) is adjusted to a value so that the energy storage device (5) can be powered by the energy provided by the sub-stations (2) at quiet times when train circulation is reduced.
